# EUROPÄISCHE PATENTANMELDUNG

(11) **EP 1 239 210 A1**
(43) Veröffentlichungstag der Anmeldung: **11.09.2002**
(21) Anmeldenummer: 02004911.0
(22) Anmeldetag: 05.03.2002
(51) Int. Cl.: F16L 41/12

(54) **Rohrmuffenanordnung**

(30) Priorität: 10.03.2001 DE 10111535
(71) Anmelder: gabo Systemtechnik GmbH, 94559 Niederwinkling (DE)
(72) Erfinder: Bauer, Peter, 94357 Konzell (DE); Karl, Markus, 94327 Bogen (DE); Lederer, Roland, 93049 Regensburg (DE)

(57) **Zusammenfassung**

Die Erfindung betrifft eine aus zwei Muffenhalbschalen (2a/2b) bestehende Rohrmuffenanordnung (1), die kraft- und formschlüssig das dieselbe durchlaufende, kabelführende Kabelkanalrohr (5) oder dergl. Rohr dichtend umschließen, wobei die eine der beiden Halbschalen (2a/2b) mit einem integrierten Abzweigstutzen (2c) für einen Abzweig (6) eines Kabels (8) ausgerüstet ist.

## Beschreibung

Die Erfindung betrifft eine aus zwei Muffenhalbschalen bestehende Rohrmuffenanordnung, die kraft- und formschlüssig das dieselbe durchlaufende, kabelführende Kabel, Kabelkanal- oder dergl. Rohr dichtend umschließen.

Rohrmuffenanordnungen sind an sich bekannt. Auch aus zwei Halbschalen bestehende Rohrmuffen sind in großer Zahl im Einsatz und haben sich bewährt. So zeigt beispielsweise die EP 06 50 007 eine Rohrmuffe, die aus zwei Halbschalen besteht und sowohl für den Einbau in Kabelkanalrohrleitungen aus Vollrohren, als auch in solche, die aus zwei Halbschalen bestehen, z. B. Reparaturrohre. Dabei ist eine Dichtung zwischen Muffeninnenwand und Rohraußenwand vorgesehen, die den Muffeninnenraum und damit das Rohrinnere gegenüber dem umgebenden Medium, beispielsweise Erdreich abdichtet, wozu eine längsgeteilte Dichtmatte in einer hinterschnittenen Nut mindestens einer der beiden Halbschalen eingerastete ist. Die DE 198 49 941 beschreibt eine Klemmuffenverbindung, die ebenfalls aus zwei Halbschalen besteht, druckdicht und geeignet ist, beispielsweise Glasfaserkabel mit hohem Druck in die Kabelkanalrohrleitung einzublasen. Erreicht wird dies durch Klemmittel außen auf der Muffenoberfläche. Diese bekannten Muffen sind zwar dicht, erlauben jedoch keine Abzweige im Muffenbereich.

Um Abzweige einer Kabelkanalrohrleitung, z.B. für nach der ursprünglichen Verlegung zusätzlich eingezogene Kabel, zu bewerkstelligen ist bereits vorgeschlagen worden ein Rohrsegment vorzusehen, wobei das Kabelkanalrohr angebohrt wird und über diese so entstandene Öffnung, einen Sattel anzubringen, der mittels Rohrschellen auf der Kabelkanalrohroberfläche befestigt ist (beschrieben in dem Prospekt aus dem Jahre 1998, der Firma Dr. E. Vogelsang GmbH & Co KG, Herten). Ein weiterer ähnlicher Abzweig geht aus der US PS 4 059 291 hervor, wobei beidseitig je ein Sattelstück über die Anbohrung eines Rohres bzw. als Gegenstück gelegt und mittels einer Klemmverbindung befestigt ist.

Solche auf Rohren mittels eines Sattels angebrachte Abzweigstutzen sind mit verschiedenen Nachteilen behaftet. Einerseits gestaltet sich die Montage umständlich und zeitaufwändig, anderseits kann der Abzweig nur dann angebracht werden, wenn das Rohr nicht aufgetrennt ist, d.h. der Abzweig kann zwar über einer Anbohrung des Rohres angebracht werden, jedoch nicht über Trennstellen, beispielsweise Reparaturstellen usw; außerdem können die Befestigungsmittel, wie Rohrschellen, Schlauchbinder usw. beschädigt werden und verrutschen, wodurch die Verbindung des Sattelstückes mit dem Rohr undicht und ggfl. auch völlig gelöst werden kann.

Der Erfindung wie sie in den Ansprüchen beschrieben ist, liegt daher die Aufgabe zugrunde, eine Rohrmuffenanordnung zu schaffen, die die Nachteile der bisherigen Rohhabzweige vermeidet, die völlig dicht und universell einsetzbar ist.

Die mit der Erfindung erzielten Vorteile liegen insbesondere in der Anwendungsmöglichkeit der Rohrmuffenanordnung sowie bei Rohren selbst, als auch über Trennstellen der Rohrleitung und zwar sowohl bei glatten Rohren, als auch bei solchen die aus Halbschalen bestehen. Weitere Vorteile liegen außer in der einfachen, raschen Montage, auch vor Ort, in der Möglichkeit damit einen Y- und auch einen X-Abzweig herstellen zu können und in der Unempfindlichkeit gegen mögliche Beschädigungen der Verbindungsmittel und dass das Hauptrohr von beiden Muffenhalbschalen und der dazwischen angeordneten Dichtmatte flächig dicht umschlossen ist, wodurch in der Dichtmatte eine Aussparung nur für den Abzweig vorzusehen ist.

Die Erfindung ist nachstehend anhand eines in den Abbildungen dargestellten Ausführungsbeispieles näher erläutert.

Es zeigt:
- Fig. 1: eine Explosionsdarstellung der erfindungsgemäßen Rohrmuffenanordnung und
- Fig. 2: eine perspektivische Darstellung der Fig. in zusammengesetztem Zustand.

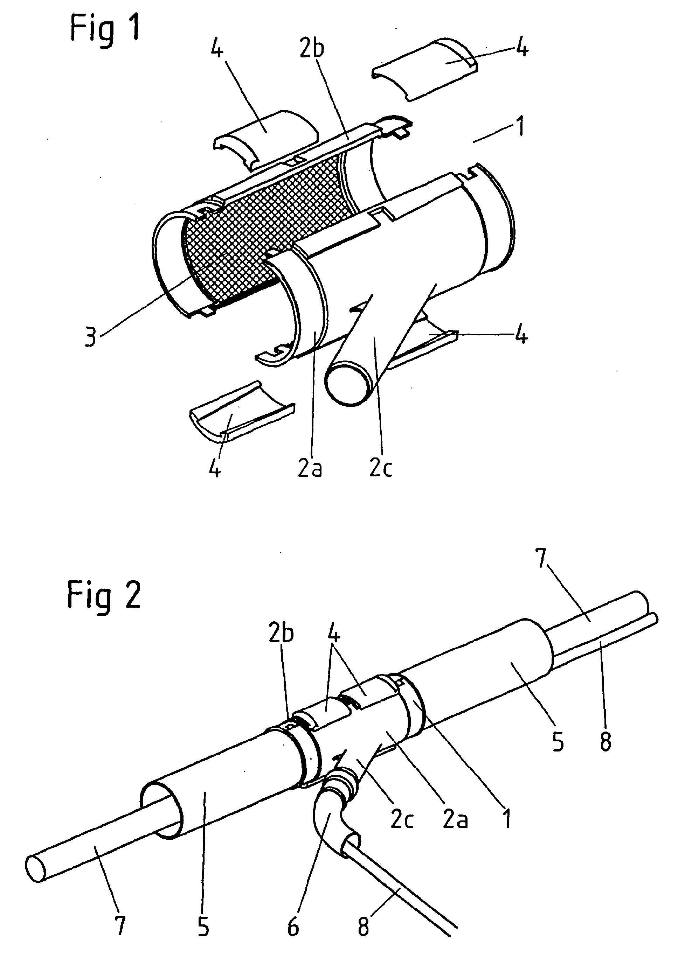

Aus der Figur 1 ist ersichtlich, dass die Rohrmuffenanordnung 1 aus zwei Muffenhalbschalen 2a und 2b, von denen die eine Halbschale 2a ohne, die zweite Halbschale 2b dagegen mit einem integrierten Abzweig 2c ausgerüstet ist. Zwischen den beiden Muffenhalbschalen 2a/2b und dem Hauptrohr 5 ist eine Dichtmatte 3 vorgesehen, die beim Anbringen der Verbindungsklammern 4 zwischen den Halbschalen 2a/2b und der Oberfläche des Hauptrohres 5 verpresst wird und somit die Verbindung sicher abdichtet.

Das Hauptrohr 5 kann wahlweise für die Anbringung des Abzweiges unterbrochen, also aufgetrennt oder dafür angesägt werden , d.h. eine sogen. Zwickelbildung. Es hat sich gezeigt, dass das Hauptrohr 5 vorteilhafterweise bis zu etwa 50% der Länge der Rohrmuffenanordnung 1 unterbrochen und durch die Rohrmuffenanordnung 1 überbrückt werden kann.
Der Abzweig 2c nimmt das Nebenkabel 8 auf, während das Hauptkabel 7 weiter im Hauptrohr 5 verläuft (Y-Abzweig) . Es kann selbstverständlich, in der Abbildungen nicht dargestellt, auch die zweite Muffenhalbschale 2b mit einem solchen Abzweig 2c ausgerüstet sein, sodass dann beide Halbschalen 2a/2b einen Abzweig für ein weiteres Nebenkabel aufweisen (X-Abzweig). Dabei ist von Vorteil, dass für diesen Anwendungsfall zwei gleiche Halbschalen 2b Verwendung finden können.

### Bezugszeichenliste

- 1: Geteilte Abzweigmuffe
- 1 a: Muffenhalbschale ohne Abzweig
- 2 b: Muffenhälfte mit Abzweig
- 2 c: Abzweig der Muffenhälfte 2 b
- 3: Dichtmatte
- 4: Verbindungsklammern
- 5: Hauptrohr
- 6: Abzweigrohr
- 7: Hauptkabel
- 8: Nebenkabel

## Patentansprüche

1. Aus zwei Muffenhalbschalen (2a/2b) bestehende Rohrmuffenanordnung (1), die kraft- und formschlüssig das dieselbe durchlaufende, kabelführende Kabelkanalrohr (7), bzw. Kabel (8) oder dergl. dichtend umschließen, **dadurch gekennzeichnet, dass** mindestens eine der beiden Muffenhalbschalen (2a/2b) mit einem integrierten Abzweigstutzen (2c) für den Abzweig (6) eines Kabels (8) ausgerüstet ist.

2. Rohrmuffenanordnung nach Anspruch 1, **dadurch gekennzeichnet, dass** das Kabelkanalrohr (5) im Bereich der Rohrmuffenanordnung (1) unterbrochen und das ungeschützte Kabel (7/8) von dieser abdichtend überbrückt ist.

3. Rohrmuffenanordnung nach Anspruch 1 und 2, **dadurch gekennzeichnet, dass** die Muffenhalbschalen (2a/2b) der Rohrmuffenanordnung (1) aus Kunststoff bestehen.
